# FASCICULE DE BREVET EUROPEEN

(11) **EP 3 042 379 B1**
(45) Date de publication et mention de la délivrance du brevet: **30.08.2017**
(21) Numéro de dépôt: 14759224.0
(22) Date de dépôt: 08.09.2014
(51) Int. Cl.: G21F 5/08, C04B 35/52, F16F 7/12, B65D 81/05, B65D 81/02, F16F 1/37

(54) **ÉLÉMENT DE PROTECTION AMORTISSEUR POUR UN EMBALLAGE DE TRANSPORT ET/OU ENTREPOSAGE DE MATIÈRES RADIOACTIVES**
STOSSDÄMPFENDES SCHUTZELEMENT ZUR VERPACKUNG RADIOAKTIVER MATERIALIEN ZUM TRANSPORT UND/ODER ZUR VORÜBERGEHENDEN LAGERUNG
SHOCK-ABSORBING PROTECTION ELEMENT FOR PACKAGING FOR THE TRANSPORT AND/OR TEMPORARY STORAGE OF RADIOACTIVE MATERIALS

(30) Priorité: 06.09.2013 FR 1358586
(43) Date de publication de la demande: 13.07.2016
(73) Titulaire: TN International, 78182 Montigny Le Bretonneux (FR)
(72) Inventeur: HOUILLON, Marie, F-78180 Montigny Le Bretonneux (FR)
(74) Mandataire: Brevalex
(86) Numéro de dépôt international: PCT/EP2014/069054
(87) Numéro de publication internationale: WO 2015/032938

(56) Documents cités:
- US-A- 5 394 449
- US-A1- 2007 248 807
- US-A1- 2010 266 813

## Description

Le sujet de l'invention est un élément de protection amortisseur à garniture en bloc solide pour un emballage de transport et/ou entreposage de matières radioactives.

Lors de la conception de tels emballages, il est nécessaire de prendre en compte des impératifs techniques dictés par les exigences réglementaires de sûreté pour le transport de matières radioactives. Parmi les tests à subir pour démontrer le respect de ces exigences réglementaires, on note différentes épreuves telles que celles dites « de chute libre », dont notamment la chute de 9 mètres sur cible indéformable.

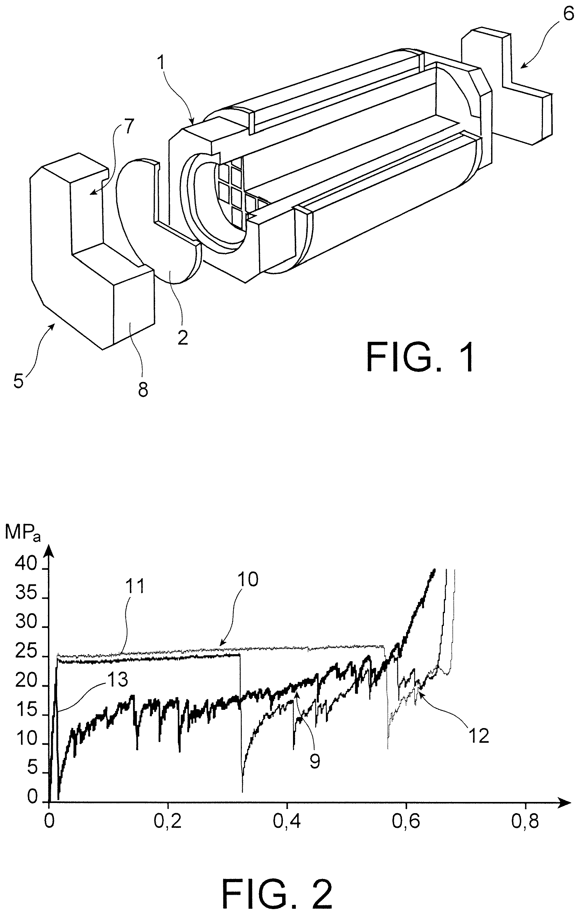

Afin d'échapper aux conséquences de telles chutes, ces emballages sont souvent munis d'éléments de protection amortisseurs à leurs faces extérieures. Dans l'emballage représenté à la Figure 1, dont la partie principale est un corps 1 cylindrique creux muni d'ailettes de refroidissement, et qui comprend encore un couvercle 2 d'obturation du corps 1, on trouve encore deux éléments de protection amortisseurs 5 et 6 aux extrémités axiales de l'emballage, qui couvrent le couvercle 2 et la face de fond du corps 1, et chacun d'eux comprend une garniture 7, logée dans une enveloppe 8 qu'on assemble au corps 1 par des boulons ou d'autres moyens de fixation.

L'enveloppe 8 doit céder en cas de choc et a donc une contribution négligeable à l'absorption d'énergie, mais sert à maintenir la garniture 7 en place sur l'emballage tout en la protégeant des petits chocs extérieurs.

La garniture 7 est généralement en bois dans les conceptions classiques, et absorbe l'énergie des chocs en s'écrasant. Néanmoins, le bois, habituellement du type balsa, chêne, ou encore cèdre rouge, présente l'inconvénient d'être un matériau orthotrope, en ayant de plus des propriétés mécaniques instables à la fois en température et en humidité. En outre, la mise en forme est complexe en raison de l'orientation des fibres.

Les matériaux connus pour composer la garniture 7 pourraient avantageusement être remplacés par de la mousse de carbone. En effet, des tests réalisés ont effectivement permis de démontrer que la mousse de carbone était un matériau amortisseur extrêmement performant, dont les caractéristiques intrinsèques convenaient parfaitement à l'utilisation au sein d'un élément de protection amortisseur pour emballage de transport de matières radioactives. Ainsi, la mousse de carbone est capable de présenter une contrainte d'écrasement élevée, pouvant aller jusqu'à 20 MPa ou plus, de même qu'elle est capable de présenter un taux d'écrasement maximum admissible de l'ordre de 60%.

Surtout, il s'agit d'un matériau de nature isotrope permettant d'optimiser l'amortissement dans les différentes directions de sollicitation, susceptibles d'être rencontrées lors des chutes axiale, oblique, ou encore latérale.

Néanmoins, une difficulté est apparue aux Inventeurs lorsqu'il s'agit de caractériser le comportement à l'écrasement de la mousse de carbone, caractérisation nécessaire au dimensionnement des emballages vis-à-vis des épreuves réglementaires de chute. Une courbe d'écrasement typique d'une telle garniture 7 ainsi représentée à la Figure 2 et porte la référence 9. Elle exprime la contrainte à exercer (en mégapascals, en ordonnées) pour soumettre la garniture 7 à une déformation croissante (en valeurs relatives, en abscisses). Cette courbe est en général croissante de façon assez régulière, et répétitive d'après les éprouvettes. Il arrive toutefois qu'une autre forme de courbe, indiquée par la référence 10, soit rencontrée : elle comporte un plateau 11 à un niveau de contrainte élevé dès le début de la compression, et ce plateau 11 peut subsister jusqu'à une déformation élevée, après quoi la déformation se poursuit à une contrainte subitement moins élevée, et pouvant d'ailleurs être moins élevée que dans la courbe 9 ordinaire à déformation identique, mais qui est ensuite croissante (portion 12).

Le comportement représenté par la courbe 10 est défavorable. Il traduit certes une absorption de l'énergie de compression plus importante par la garniture 7, du moins tant que le plateau 11 subsiste, mais cela n'est pourtant pas souhaité, puisque la largeur du plateau 11 est imprévisible et que les critères de dimensionnement des garnitures seraient alors incertains. De plus, la rigidité initiale dont fait alors preuve la mousse peut impliquer, malgré l'augmentation de l'absorption d'énergie, une altération de sa faculté à amortir.

Après avoir constaté ce phénomène, les Inventeurs sont arrivés aux constatations que voici : le plateau 11 est la conséquence d'un pic 13 initial, qui exprime la contrainte souvent élevée qui est nécessaire pour infliger les premiers dommages à la garniture 7 ; ce pic 13 se rencontre souvent, et aussi chez les éprouvettes ayant le comportement habituel, représenté par la courbe 9; mais il est alors de largeur très réduite, son effet est très faible, et la contrainte nécessaire pour poursuivre la déformation diminue tout de suite, avant de croître, alors que la valeur de contrainte atteinte au pic 13 se prolonge, pour donner le plateau 11, dans le cas de la courbe 10. Les Inventeurs se sont aperçus que les garnitures 7 à la courbe 9 étaient sujettes à des fissurations précoces de la mousse à travers toute leur profondeur, qui les fragmentaient en morceaux de plus en plus petits et pour finir en poudre, écrasant la mousse de façon homogène, ce qui explique la croissance à peu près régulière de la déformation sous une contrainte croissant modérément; alors que le plateau 11 implique que les dommages restent superficiels et limités aux endroits où les pressions s'appliquent et correspond à un état métastable de déformations, avant que la garniture 7 ne retrouve le comportement habituel de fissuration en profondeur, à la portion 12.

L'objet de l'invention est d'éliminer les comportements de compression aux dommages purement superficiels de telles garnitures 7 en mousse de carbone, et de faire que le comportement représenté par la courbe 9, répétitive pour toutes les garnitures 7, soit au contraire garanti.

Il est à noter que le mode de compression impliquant des dommages superficiels traduisant le plateau 11 n'apparaît que dans le cas où la garniture en mousse de carbone est confinée dans une enveloppe rigide, qui peut par exemple être réalisée dans un matériau métallique dont l'épaisseur peut varier entre 1 et 5 mm. Ainsi, si la garniture en mousse est totalement libre, il y a très peu de chances pour que le plateau 11 se produise. Or, si l'on veut qu'une garniture en mousse de carbone s'écrase correctement au moment de l'impact sans se disloquer ou s'échapper sur les côtés, celle-ci doit absolument être confinée de sorte que la plus grande partie de la garniture puisse participer à l'absorption d'énergie par déformation. On pourra d'ailleurs noter que l'on ne retrouve pas nécessairement cette difficulté avec le bois, beaucoup moins fragile que la mousse de carbone.

Afin d'éliminer les comportements de compression évoqués ci-dessus, diverses dispositions peuvent être prises. L'une d'entre elles consiste à pourvoir la garniture d'irrégularités de structure, consistant en une ou plusieurs discontinuités de la mousse, la mousse délimitant la discontinuité, ou les discontinuités, par une section comprenant un angle rentrant de la mousse. Par angle rentrant on entend un angle strictement compris entre 180° et 360° et de préférence, entre 270° et 350°. En d'autres termes, la discontinuité possède au moins une portion qui s'effile jusqu'à une extrémité formant un angle saillant vif dans la mousse. Les irrégularités doivent avoir des dimensions au moins égales à cinq fois un diamètre maximal de pores de la mousse, ainsi qu'on le détaillera plus tard, mais elles peuvent être opérées à tout endroit de la garniture, c'est-à-dire sur la face soumise à l'impact, la face opposée adjacente à l'emballage protégé, sur les faces latérales, voire à l'intérieur de la garniture. A ce titre, on pourra préciser que la face soumise à l'impact n'est pas nécessairement strictement perpendiculaire à la direction d'application des forces d'impact pour que l'invention fonctionne. Il est encore remarquable de relever que l'effet favorable des irrégularités subsiste même si les creux qu'elles forment sont rebouchés par des bouchons de la même mousse, quand on veut rétablir le volume de la garniture et sa faculté d'absorption d'énergie, puisque la discontinuité de structure subsiste. Dans toutes les situations, une fissure menant à une rupture apparaît dans la structure de la mousse, à l'endroit de l'angle que fait la discontinuité, et cette fissure garantit le passage immédiat de la garniture en mousse de carbone, à son comportement recherché selon la courbe 9. Il est à noter que d'autres irrégularités de forme ou de structure, qui seraient dépourvues d'angle rentrant de la mousse, ne produiraient pas de concentration de contrainte suffisante pour produire nécessairement la fissuration. C'est ainsi que des trous traversants à section circulaire, par exemple des perçages recevant des tiges d'attache de la garniture, sont dépourvus de tels angles et ne conviennent donc pas. Il en irait de même des trous à fond arrondi, par exemple. Par ailleurs, et comme évoqué précédemment, le problème technique spécifique à l'invention existe seulement pour des garnitures enveloppées rigidement, le comportement de la courbe 10 n'apparaissant en principe pas pour des garnitures exposées à l'extérieur et subissant donc directement les impacts.

Alternativement, on pourvoit la surface interne de l'enveloppe d'une excroissance ayant une section formant un angle saillant. La surface interne de l'enveloppe comprenant l'excroissance est située en vis-à-vis de la surface externe de l'enveloppe exposée aux impacts. L'excroissance remplit alors un rôle sensiblement identique à celui de la discontinuité dans la mousse au moment de l'impact, une fissure menant à une rupture apparaissant dans la structure de la mousse lorsque l'excroissance vient impacter la garniture.

Une autre façon de procéder consiste à revêtir la face de la mousse exposée aux impacts d'un revêtement durcissant. Celui-ci peut être réalisé en comblant les pores débouchant de la mousse par une enduction ou une incrustation superficielle d'une matière apte à durcir cette surface sur une épaisseur donnée. En effet, les dommages superficiels ne peuvent plus apparaître facilement, de sorte que la fissuration de la mousse se développe tout de suite en profondeur.

Dans une autre façon de procéder encore, on laisse subsister un jeu non négligeable entre la face périphérique de la garniture et l'enveloppe, afin de tolérer sa dilatation périphérique quand la compression commence, et donc de permettre des décohésions internes de la matière, qui amorcent la fissuration en profondeur. La garniture est alors placée au sein de l'enveloppe sous forme de bloc préfabriqué, après avoir été préalablement usinée aux dimensions requises. La garniture n'est donc pas injectée dans l'enveloppe comme cela peut être le cas pour certains autres types de mousse, comme la mousse phénolique.

Dans une autre façon de procéder encore, où la garniture peut avoir une forme et une structure parfaitement régulière, l'amorce de rupture est causée par une excroissance, ou plusieurs excroissances saillant à la face interne de l'enveloppe, vers la surface de la garniture, et qui y pénètrent quand l'enveloppe est enfoncée par un impact.

Les matériaux auxquels l'invention peut s'appliquer sont donc les mousses de carbone à structure poreuse, les porosités pouvant être fermées ou ouvertes. On pourra noter que la mousse de carbone est un matériau rigide et fragile, c'est-à-dire apte à se rompre presque sans déformation plastique. Leur porosité peut être de 50 % au moins, de manière qu'elles possèdent une hauteur d'écrasement suffisante.

L'art antérieur proche comprend US 5 394 449 A, qui décrit une garniture en mousse évidée de perçages dépourvus d'angles vifs rentrant dans la mousse et donc inaptes à produire les propriétés de l'invention ; FR 2 971 615 A, qui décrit des blocs de mousse quasi sphériques, dépourvus d'enveloppe rigide ; et JP 01 124799 A, qui décrit une mousse dans laquelle on injecte un polymère ou de la céramique, mais la mousse est métallique.

L'invention sera maintenant décrite en liaison aux Figures, qui illustrent ses différents aspects et donnent certains modes de réalisation non exclusifs d'autres :
- la Figure 1 est une vue générale d'un emballage de transport et/ou entreposage de matières radioactives, sur lequel l'invention peut trouver place ;
- la Figure 2 exprime le phénomène mis en jeu ; et
- les Figures suivantes 3, 4, 5, 6, 7, 8, 9, 10, 11, 12, 13, 14, 15, 16, 17, 18, 19 et 20 illustrent divers modes de réalisation de l'invention.

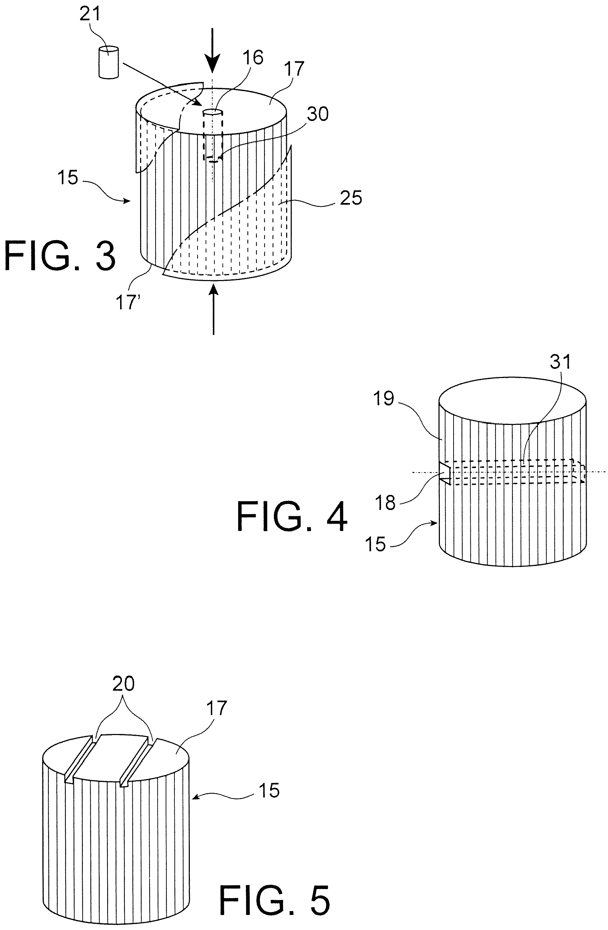

Les Figures 1 et 2 ayant déjà été décrites, on se reporte à la Figure 3. Elle représente une garniture 15 d'élément de protection amortisseur, se présentant sous l'aspect d'un bloc massif et cylindrique, susceptible d'être comprimé par des forces orthogonales à la face 17 destinée à subir l'impact. On pourra noter que dans ce cas particulier la face exposée à des impacts 17 et la face 17' opposée et adjacente à l'emballage sont planes et parallèles entre elles. Les forces appliquées sont indiquées par des flèches sur la figure 3. Il est conforme à l'invention que la forme régulière du cylindre soit brisée par un trou 16, qui, dans ce mode de réalisation, est percé dans la face d'impact 17. Cette irrégularité de forme ou de structure interdit au plateau 11 de se produire et garantit la réaction de la garniture 15 aux chocs d'après la courbe 9 de la Figure 2. Le trou 16 peut être de forme quelconque. Il convient toutefois qu'il ne traverse pas la garniture 15 de part en part, s'il est, comme ici, creusé dans la direction d'application des forces. En effet, il est essentiel à la bonne réalisation de l'invention que la garniture 15 fasse un angle vif, rentrant, avec le trou 16, ce qu'on obtient ici au fond de celui-ci, à l'arête de fond 30 perpendiculaire (ou plus généralement sécante) à la direction de l'effort d'impact. L'angle rentrant prend ici une valeur d'environ 270°. C'est à cet endroit qu'apparaîtra forcément une fissure en cas d'impact, grâce aux concentrations de contrainte subies à cet endroit, et qui se propageront immédiatement au reste de la structure, en produisant sa destruction par émiettage et lui permettant d'assumer son rôle d'absorption d'énergie. Un fond arrondi du trou 16, hémisphérique par exemple, ne serait par contre pas convenable. Une arête à angle vif disposée parallèlement à la direction de l'effort d'impact pourrait aussi être insuffisante puisqu'aucune concentration de contrainte notable n'y serait produite : elle n'est donc pas considérée comme relevant de l'invention. Il est préconisé que les dimensions du trou 16 soient au moins cinq fois environ la taille des pores sphériques parmi les plus gros de la mousse. Il est à noter que la position du trou sur la face d'impact 17 n'est pas nécessaire : la Figure 4 illustre un autre mode de réalisation, où le trou 18 est établi sur la face périphérique 19 du cylindre : l'effet est le même. Le trou 18 est représenté traversant, mais cela n'est pas critique ici. Il faut par contre que la section du trou 18 soit polygonale, carrée par exemple, dans une telle situation, afin qu'il existe des arêtes 31 formant des angles vifs rentrants de la garniture 15 pour, ici encore, donner des zones de concentrations de contrainte en cas d'impact, qui amorcent la fissuration et la rupture. Il est à noter que les trous 16 ou 18 peuvent être rebouchés après avoir été usinés, au moyen du bouchon 21 de la Figure 3, qu'on met en place après l'usinage du trou 16. On rétablit ainsi le volume initial de la garniture 15 et son efficacité d'absorption aux chocs, mais sans le risque d'observer la courbe 10 au plateau 11. Dans ce mode de réalisation, comme dans tous les autres, la garniture 15 est couverte par une enveloppe 25 rigide, qui est représentée seulement en partie ici. L'enveloppe 25 n'a pas été représentée dans la plupart des figures par souci de clarté. Elle enveloppe la garniture 15 soit complètement, soit seulement aux faces donnant sur l'extérieur. Lorsqu'elle enveloppe la garniture 15 complétement, l'élément de protection amortisseur peut alors être amovible et indépendant du reste de l'emballage. Elle peut avoir 2 mm d'épaisseur, ce qui lui permet de se déformer lors d'un impact et de permettre l'écrasement de la garniture 15, malgré sa rigidité à de faibles efforts, tout en garantissant un confinement latéral de la mousse.

Il convient que les irrégularités de structure soient créées à une profondeur suffisante pour imposer des dommages au-delà de la face d'impact 17 subissant la pression de choc et la face opposée subissant la contre-pression de réaction, et dans des zones soumises à la compression. Les trous tels que 16 établis sur une de ces faces doivent donc avoir une profondeur suffisante pour satisfaire au premier critère et une section suffisante pour créer une discontinuité assez importante pour produire la concentration de contrainte nécessaire, d'où les critères de dimensionnement précédents. Les trous tels que 18 établis sur la face périphérique 19 doivent aussi avoir une section et une profondeur suffisantes pour créer les concentrations de contrainte ; ils pourront en pratique être plus longs que les trous tels que 16 (d'où la proposition des trous 18 traversants, sans qu'elle soit indispensable) afin d'éviter d'être démuni contre les situations de chocs localisés sur une portion périphérique de la garniture 15 éloignée des trous 18, puisque les alentours de celui-ci seraient alors peu contraints.

La Figure 5 illustre un mode de réalisation un peu différent, qui montre que les trous 16 ou 18 peuvent être remplacés par une ou plusieurs rainures 20, ici striant la face d'impact 17, sans que cette condition soit non plus nécessaire, puisque des rainures sur la face périphérique 19 auraient encore le même effet. Les critères de dimensionnement sont analogues : les rainures 20 doivent avoir une section suffisante pour permettre la création de concentrations de contrainte importantes et pénétrer sous la couche superficielle de la face d'impact 17 ou de la face opposée. Ses dimensions peuvent être encore d'au moins cinq fois les diamètres des gros pores de la mousse, de préférence 10 fois. Leur extension en longueur leur permet de s'étendre avec plus de certitude aux endroits soumis à des chocs même localisés.

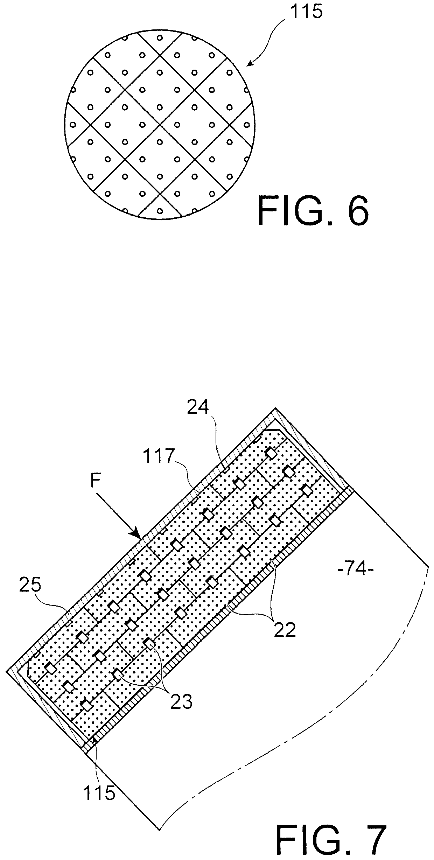

Un autre mode de réalisation est décrit aux Figures 6 et 7. La garniture porte la référence 115, et comprend quatre couches successives. Chaque couche est construite à partir de blocs 22 plus petits, assemblés d'une couche à l'autre, par des éléments de liaison qui peuvent prendre la forme de pions 23 pouvant être d'une mousse de même composition ou d'une autre matière, qui s'étendent d'une couche à l'autre des blocs 22. Les blocs 22 étant disposés en quinconce d'une couche à l'autre, un agencement unitaire est obtenu. Des trous 24, analogues aux trous 16, sont établis sur la surface extérieure de la garniture 115, du côté de la face d'impact 17, comme pour la réalisation de la Figure 3. Les trous 24 forment ici un réseau et sont régulièrement répartis, un étant présent sur chacun des blocs 22 de la couche supérieure. Les trous de réception des pions 23 permettent d'amorcer les dommages en profondeur de la mousse dans chacun des blocs 22. De par la configuration des trous de réception des pions 23, on pourra noter que les blocs 22 constituant les trois dernières couches, en partant du côté de l'emballage, comportent chacun au moins une discontinuité sur chacune des faces exposées aux impacts et opposées adjacentes à l'emballage. Plus généralement, le même effet d'apparition de concentrations de contrainte et de fissuration en profondeur pourrait apparaître avec des inclusions de forme et de matière quelconque au sein de la mousse à condition qu'une discontinuité de structure conforme à l'invention et de dimensions suffisantes (toujours au moins cinq fois le diamètre de gros pores de la mousse, mais de préférence au moins dix fois) soit présente.

Quelques exemples développant les notions précédentes seront maintenant donnés.

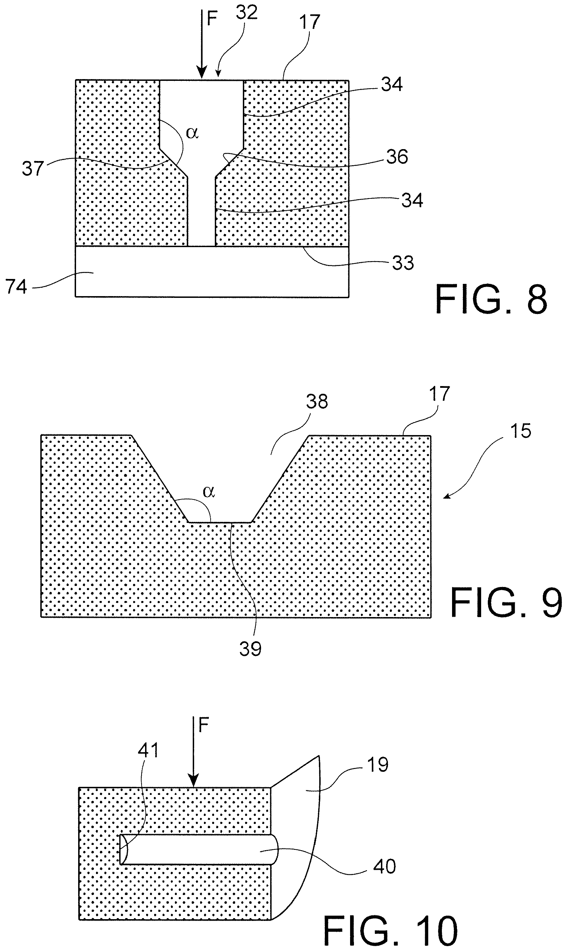

A la figure 8, un trou 32 s'étend depuis la face d'impact 17 jusqu'à la face opposée 33, adjacente à l'emballage en cas de transport, ou d'entreposage à protéger. Ce trou 32 traversant comprend une section large 34, raccordée à une section plus étroite 35 par un chanfrein conique 36. C'est ce dernier qui assure la présence de l'invention, grâce à l'arête 37, avec laquelle il se raccorde à la section la plus large 34.

A la figure 9, la garniture 15 comprend un trou 38 non débouchant, conique, à fond plat, et l'amorce de fissuration sera produite à l'arête 39, entre ce fond et la paroi principale conique du trou 38. Cette arête permet de définir un angle rentrant de la mousse d'environ 220°, caractéristique de la discontinuité selon l'invention.

D'une façon générale, l'orientation de ces trous peut être quelconque, aussi bien débouchant à la face d'impact 17, qu'à la face opposée 33, ou qu'à la face périphérique 19. On l'illustre par la réalisation de la figure 10, qui comprend un trou 40 à section circulaire, non débouchant, s'ouvrant sur la face périphérique 19 : le trou 40 est analogue au trou 16 de la figure 3 par sa forme, comporte notamment un fond plat et il dispose donc d'un angle vif à une arête de fond 41, qui créera la fissuration souhaitée.

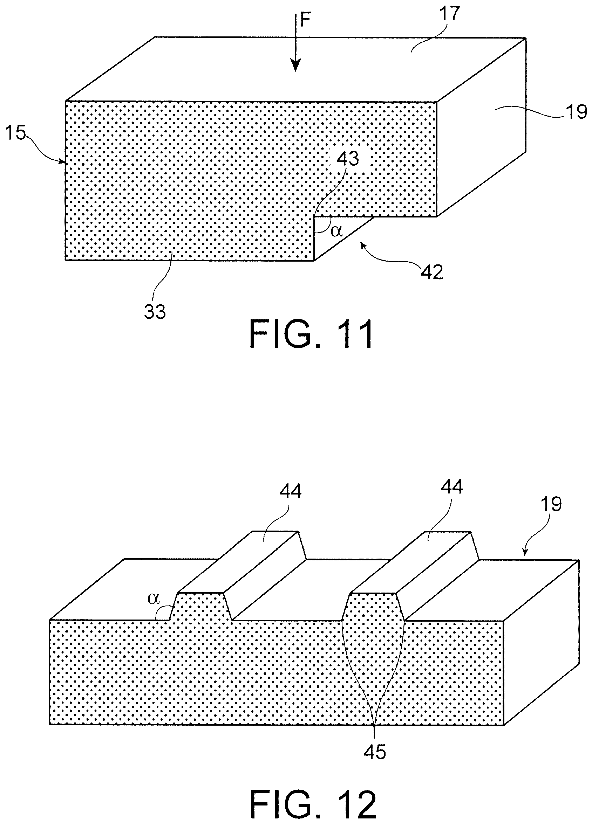

La réalisation de la figure 11 montre une autre disposition, où l'irrégularité de forme est composée par une entaille 42 manquant à un coin de la garniture 15. Ici encore, l'entaille a un angle vif et dessine une arête 43 dans la garniture 15, par laquelle se produira la fissuration. Ici, l'entaille 42 s'ouvre à la fois sur la face opposée 33 et la face latérale 19, sans que cela soit nécessaire.

La réalisation de la figure 12 est analogue à celle de la figure 5, si ce n'est que les rainures 20 qui y étaient décrites sont remplacées par des saillies 44, dépassant de la face d'impact 19, comme on l'a représenté ici, ou de la face opposée 33. Les raccordements des saillies 44 à la face en question sont des arêtes 45 à angle vif, jouissant toujours de la faculté de fissuration. Ces arêtes 45 permettent de définir un angle rentrant de la mousse d'environ 270°. Des irrégularités admissibles sont aussi constituées des reliefs de forme quelconque, créés par tous les procédés envisageables, et notamment tous procédés d'usinage comprenant des creux laissés vides ou occupés par des inclusions, à condition de veiller à la création de l'arête de fissuration.

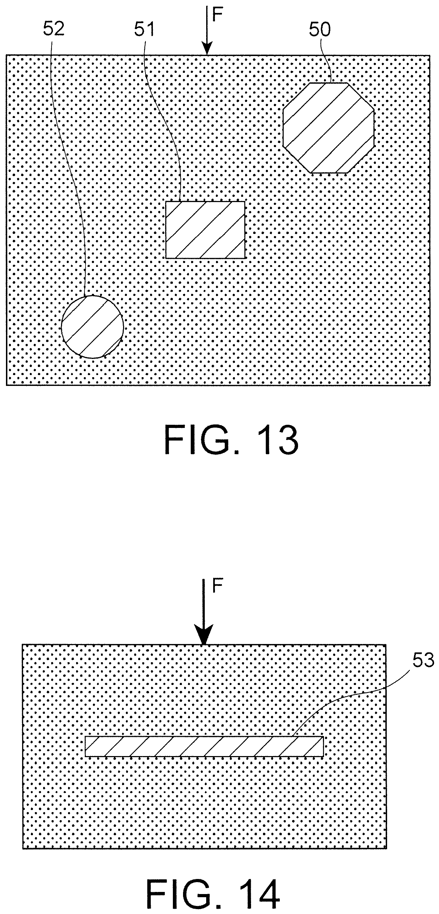

La réalisation de la figure 13 illustre des inclusions massives de différentes formes admissibles au coeur de la garniture 15 : un polygone 50 à nombreuses facettes, un cube 51, ou une sphère privée d'une calotte 52.

Et la figure 14 illustre encore une barre 53, noyée, comme les autres inclusions, au coeur de la garniture 15, par surmoulage.

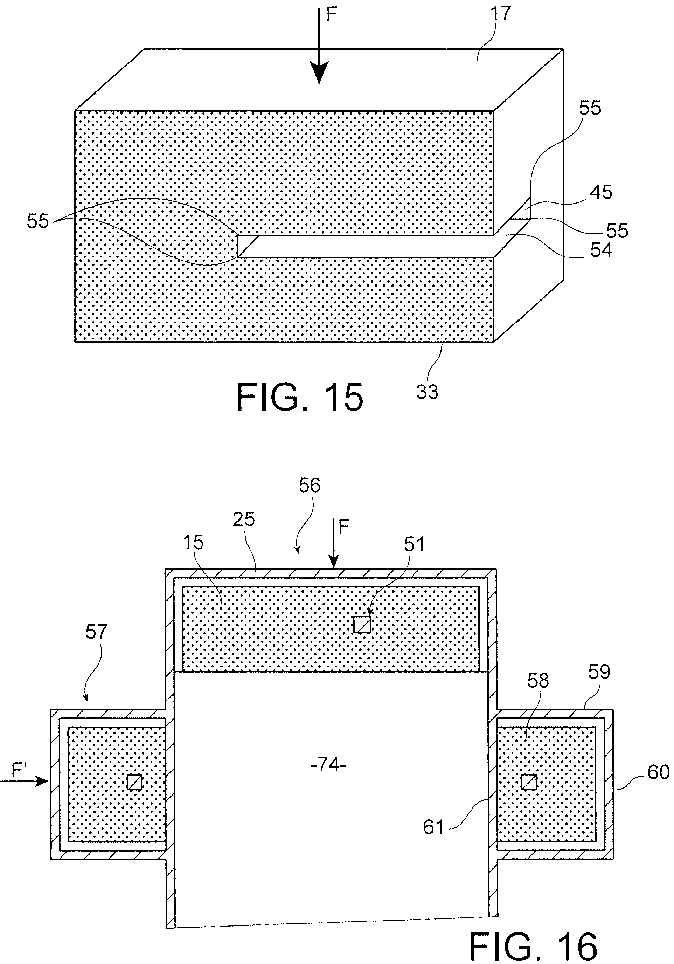

Dans la réalisation de la figure 15, l'irrégularité de forme est une entaille 54 établie sur la face périphérique 19, avec un enfoncement perpendiculaire à la direction d'application des forces d'impact. Les arêtes 55 amorçant la fissuration apparaissent au fond de cette entaille 54, à condition évidemment qu'il ne soit pas arrondi.

On se reportera encore à la figure 16, qui illustre que l'élément de protection n'est pas forcément un élément placé en tête de l'emballage 74 : on trouve dans cette réalisation, outre un tel élément de protection 56 de tête, comprenant une enveloppe 25, une garniture 15 conforme à ce qui précède, avec, par exemple, une inclusion interne cubique 51, un élément de protection 57 latéral, de forme annulaire, entourant l'emballage 74, qui peut être construit selon les principes précédents et donc appartenir à l'invention : il comporte alors une garniture 58 annulaire, une enveloppe 59 également annulaire, entourant la garniture 58, et, de nouveau, des irrégularités de structure, de dimensions suffisantes, comme des trous, des entailles, ou des inclusions conformes aux critères précédents. La face d'impact considérée sera ici la face extérieure 60 de l'enveloppe 59, la face opposée sera encore la face adjacente à l'emballage 74, c'est-à-dire ici la face intérieure 61, et les faces planes auront le rôle de la face périphérique 19 des réalisations précédemment considérées. La force d'impact frontale, semblable à celle qu'on considère dans les réalisations précédentes, est notée F, la force d'impact latérale, qui justifie la garniture 58 annulaire, F'.

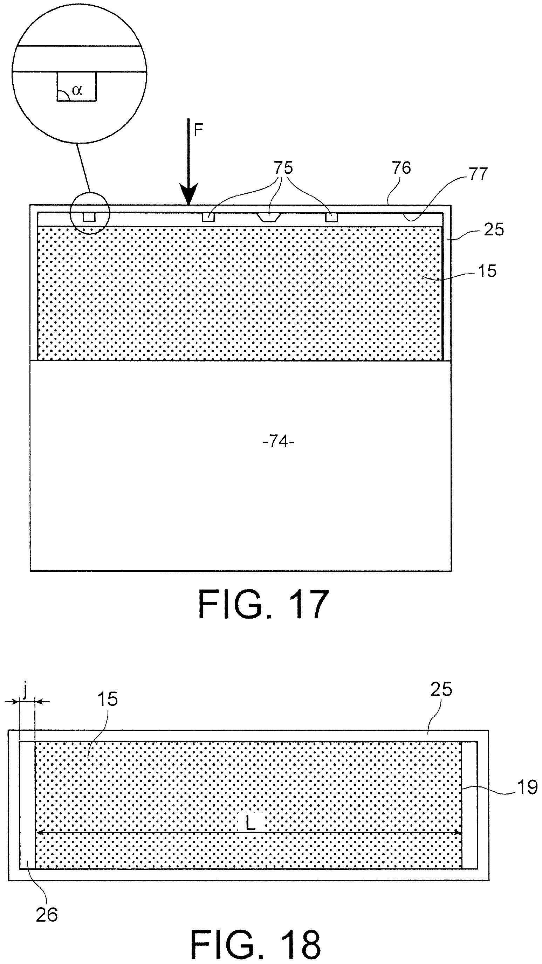

Une autre disposition contribue aussi à supprimer la possibilité pour le plateau 11 d'apparaître, au point qu'on peut l'utiliser seule, sur une garniture 15 à la forme ou la structure parfaitement régulière (figure 17). L'enveloppe 25 de protection de la garniture 15 comprend sur sa face interne au moins une excroissance 75 qui peut par exemple prendre la forme d'un picot. Cette excroissance 75 comprend ainsi une section saillante permettant d'amorcer une rupture du volume de la garniture 15 lorsque l'excroissance 75 vient le heurter. La face interne 76 de l'enveloppe 15, comprenant l'excroissance, est située en vis-à-vis de la surface externe 77 de l'enveloppe exposée aux impacts. Quand l'enveloppe 25 subit un impact, elle s'enfonce et l'excroissance 75 (ou les excroissances) pénètre dans la garniture 15 et l'entame. L'excroissance 75 est de préférence cylindrique, conique ou tronconique s'effilant vers la garniture 15. Ses dimensions doivent encore être suffisantes pour causer des dommages permettant d'amorcer la rupture d'ensemble de la garniture 15, selon les critères précédents. L'excroissance 75 ou les excroissances sont distantes de la garniture 15 avant l'impact.

Un autre mode de réalisation contribue également à supprimer la possibilité pour le plateau 11 d'apparaître, au point qu'on peut l'utiliser seul, sur une garniture 15 à la forme ou la structure parfaitement régulière (figure 18). L'enveloppe 25 de protection de la garniture 15 fait avec elle un jeu périphérique 26, au lieu de la sertir rigidement, comme il est habituel. De préférence, l'enveloppe 25 est métallique mais elle peut également être réalisée en matériau composite, notamment à base de fibres de carbone. Quand un impact a lieu, la matière de la garniture 15 a la faculté de se déformer par une expansion radiale, qui permet l'apparition de fissures dans sa profondeur par décohésion de la matière. Un jeu régulier de largeur j entre la face périphérique 19 et l'enveloppe 25 de 0,1 à 5% de la largeur L de la garniture 15 entre deux portions opposées de sa face périphérique 19 est possible pour obtenir l'effet souhaité. La garniture 15 peut être retenue au centre de l'enveloppe 25 par des cercles d'espaceurs, par exemple.

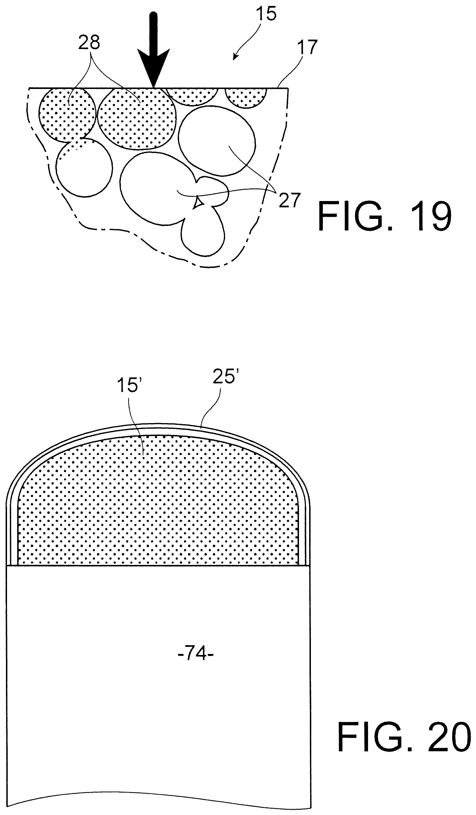

Un autre mode de réalisation encore est décrit à la Figure 19, qui représente un détail d'une garniture telle que 15 représentée antérieurement mais dont la forme ou la structure peut encore être parfaitement régulière. La mousse est composée d'une structure cellulaire comprenant des pores 27, essentiellement sphériques, de gros diamètre et pouvant être ouverts ou fermés. Les pores 27 débouchant à l'extérieur de la garniture 15 sont issus des opérations d'usinage réalisées préalablement sur la garniture avant son insertion dans l'enveloppe. Le mode de réalisation dont il est question ici revient à comble, en partie ou totalement, les gros pores 27 situés à la surface par une enduction une incrustation ou plus généralement un revêtement 28 durcissant. On considère les pores 27 débouchant à l'extérieur de la garniture 15, et avant tout à la face d'impact 17, éventuellement la face de contre-pression. L'utilisation de vernis ou de graphite a été mise en oeuvre avec succès. Ce revêtement possède aussi les propriétés lubrifiantes, qui peuvent le rendre utile dans certaines applications, où la garniture 15 est sujette à des frottements. La couche superficielle de la garniture 15 étant renforcée par le revêtement 28 durci, les premiers dommages ont lieu plus à l'intérieur, entre les pores 27 laissés vides. La propagation des dommages à l'intérieur de la mousse est favorisée en cas d'impact, ce qui contribue à donner un écrasement conforme aux prévisions, en évitant encore le plateau 11 de la figure 2. Les pores 27 décrits à propos de cette invention sont des gros pores ouverts ou fermés essentiellement sphériques, dont le diamètre peut être typiquement de 1 mm ; ce sont ces gros pores 27 qui régissent les critères de dimensionnement des irrégularités externes ou internes vues plus haut à propos des figures 3 à 16. La mousse comprend encore souvent des réseaux de pores plus fins, de 10 µm à 100 µm de diamètre, qui forment un réseau continu, mais qui n'ont pas été représentés ici et ne jouent pas de rôle direct dans l'invention.

D'une façon générale, les caractéristiques des modes de réalisation décrits ici peuvent être cumulées sur une même garniture.

Enfin, il n'est pas nécessaire que la face d'impact, pas plus que la face opposée adjacente à l'emballage 34, soient planes, comme on l'a déjà vu à propos de la figure 17 : la figure 20 illustre encore une autre possibilité, celle d'un élément de protection de tête d'emballage 34, à face d'impact 17' bombée en calotte, et couverte d'une enveloppe 25' de même forme bombée. Les dispositions précédentes de l'invention peuvent être appliquées.

## Revendications

1. Élément de protection amortisseur pour emballage de transport et/ou entreposage de matières radioactives, ledit élément comprenant une garniture (15) solide en mousse rigide et fragile, une enveloppe (25) rigide couvrant la garniture, la garniture possédant entre une face (17) exposée à des impacts et une face opposée adjacente à l'emballage (74), une discontinuité de la mousse, la discontinuité possédant des dimensions au moins égales à cinq fois un diamètre maximal de pores de la mousse, la mousse délimitant la discontinuité par une section comprenant un angle rentrant de la mousse,
**caractérisé en ce que** la mousse est une mousse de carbone.

2. Elément de protection amortisseur selon la revendication 1, **caractérisé en ce que** la discontinuité est un volume vide.

3. Elément de protection amortisseur selon la revendication 1, **caractérisé en ce que** la garniture est usinée.

4. Elément de protection amortisseur selon la revendication 1, **caractérisé en ce que** la discontinuité est un volume occupé soit par un bouchon de la mousse de carbone séparé de la garniture, soit par une inclusion solide.

5. Elément de protection amortisseur selon l'une quelconque des revendications 1 à 4, **caractérisé en ce que** la discontinuité est présente soit sur la face exposée aux impacts, soit sur la face opposée.

6. Elément de protection amortisseur selon la revendication 1, **caractérisé en ce que** la garniture comprend une pluralité de blocs solides préfabriqués en mousse de carbone.

7. Elément de protection amortisseur selon la revendication 6, **caractérisé en ce que** chaque bloc solide comprend au moins une discontinuité.

8. Elément de protection amortisseur selon la revendication 5, **caractérisé en ce que** la face exposée aux impacts et la face opposée sont planes et parallèles.

9. Elément de protection amortisseur selon l'une quelconque des revendications précédentes, **caractérisé en ce que** la discontinuité est formée par un usinage.

10. Élément de protection amortisseur pour emballage de transport et/ou entreposage de matières radioactives, ledit élément comprenant une garniture (15) solide en mousse rigide et fragile, une enveloppe (25) rigide couvrant la garniture, **caractérisé en ce que** la mousse est une mousse de carbone, et la garniture possède, sur au moins la face exposée aux impacts, un revêtement (28) durcissant.

11. Elément de protection amortisseur selon la revendication 10, **caractérisé en ce que** le revêtement durcissant comble des pores (27) de la mousse.

12. Élément de protection amortisseur pour emballage de transport et/ou entreposage de matières radioactives, ledit élément comprenant une garniture (15) solide en mousse rigide et fragile, une enveloppe (25) rigide couvrant la garniture, **caractérisé en ce que** la mousse est une mousse de carbone, et **en ce que** l'élément de protection comprend un jeu (26) entre l'enveloppe et une face périphérique de la garniture joignant la face exposée aux impacts à la face opposée.

13. Elément de protection amortisseur selon la revendication 12, **caractérisé en ce que** le jeu périphérique est compris entre 0,1 % et 5 % d'une dimension de largeur de la garniture entre deux portions opposées de la face périphérique.

14. Elément de protection amortisseur pour emballage de transport et/ou entreposage de matières radioactives, ledit élément comprenant une garniture (15) solide en mousse rigide et fragile, une enveloppe (25) rigide couvrant la garniture, **caractérisé en ce que** la mousse est une mousse de carbone et **en ce que** l'enveloppe est munie à une face interne, dirigée vers la garniture, d'au moins une excroissance (75).

15. Elément de protection selon la revendication 14, **caractérisé en ce que** l'excroissance est soit cylindrique, soit conique, soit tronconique.

16. Elément de protection selon l'une quelconque des revendications 14 ou 15, **caractérisé en ce que** la garniture (15) a une structure régulière, et l'excroissance (75) est séparée de la garniture par un jeu.

17. Emballage (74) de transport et/ou entreposage de matières radioactives, **caractérisé en ce que** sa surface est munie d'au moins un élément de protection amortisseur selon l'une quelconque des revendications précédentes, qui lui est lié.

## Patentansprüche

1. Dämpfungs-Schutzelement zur Verpackung zum Transport und/oder der Lagerung von radioaktiven Materialien, wobei das Element eine feste Auskleidung (15) aus steifem und sprödem Schaum umfasst, wobei eine steife Hülle (25) die Auskleidung bedeckt, wobei die Auskleidung zwischen einer Fläche (17), welche Stößen ausgesetzt ist, und einer gegenüberliegenden Fläche benachbart zu der Verpackung (74) eine Unterbrechung des Schaums besitzt, wobei die Unterbrechung Abmessungen besitzt, welche wenigstens gleich fünf Mal einem maximalen Durchmesser der Poren des Schaums sind, wobei der Schaum die Unterbrechung durch einen Schnitt begrenzt, welcher einen überstumpfen Winkel des Schaums umfasst,
**dadurch gekennzeichnet, dass** der Schaum ein Kohlenstoffschaum ist.

2. Dämpfungs-Schutzelement nach Anspruch 1, **dadurch gekennzeichnet, dass** die Unterbrechung ein leeres Volumen ist.

3. Dämpfungs-Schutzelement nach Anspruch 1, **dadurch gekennzeichnet, dass** die Auskleidung bearbeitet ist.

4. Dämpfungs-Schutzelement nach Anspruch 1, **dadurch gekennzeichnet, dass** die Unterbrechung ein Volumen ist, weiches entweder von einem von der Auskleidung getrennten Pfropfen aus Kohlenstoffschaum oder von einem festen Einschluss eingenommen ist.

5. Dämpfungs-Schutzelement nach einem der Ansprüche 1 bis 4, **dadurch gekennzeichnet, dass** die Unterbrechung entweder an der Fläche vorliegt, welche Stößen ausgesetzt ist, oder an der gegenüberliegenden Fläche.

6. Dämpfungs-Schutzelement nach Anspruch 1, **dadurch gekennzeichnet, dass** die Auskleidung eine Mehrzahl von festen Blöcken umfasst, welche aus Kohlenstoffschaum vorgefertigt sind.

7. Dämpfungs-Schutzelement nach Anspruch 6, **dadurch gekennzeichnet, dass** jeder feste Block wenigstens eine Unterbrechung umfasst.

8. Dämpfungs-Schutzelement nach Anspruch 5, **dadurch gekennzeichnet, dass** die Stößen ausgesetzte Fläche und die gegenüberliegende Fläche eben und parallel sind.

9. Dämpfungs-Schutzelement nach einem der vorhergehenden Ansprüche,
**dadurch gekennzeichnet, dass** die Unterbrechung durch eine Bearbeitung gebildet ist.

10. Dämpfungs-Schutzelement zur Verpackung zum Transport und/oder der Lagerung von radioaktiven Materialien, wobei das Element eine feste Auskleidung (15) aus steifem und sprödem Schaum umfasst, wobei eine steife Hülle (25) die Auskleidung bedeckt, **dadurch gekennzeichnet, dass** der Schaum ein Kohlenstoffschaum ist und dass die Auskleidung an wenigstens einer Fläche, welche Stößen ausgesetzt ist, eine härtende Auflage (28) besitzt.

11. Dämpfungs-Schutzelement nach Anspruch 10, **dadurch gekennzeichnet, dass** die härtende Auflage Poren (27) des Schaums auffüllt.

12. Dämpfungs-Schutzelement zur Verpackung zum Transport und/oder der Lagerung von radioaktiven Materialien, wobei das Element eine feste Auskleidung (15) aus steifem und sprödem Schaum umfasst, wobei eine steife Hülle (25) die Auskleidung bedeckt, **dadurch gekennzeichnet, dass** der Schaum ein Kohlenstoffschaum ist, und dass das Schutzelement einen Freiraum (26) zwischen der Hülle und einer Umfangsfläche der Auskleidung umfasst, welche die Stößen ausgesetzte Fläche und die gegenüberliegende Fläche verbindet.

13. Dämpfungs-Schutzelement nach Anspruch 12, **dadurch gekennzeichnet, dass** der Umfangsfreiraum zwischen 0,1% und 5% einer Größenabmessung der Auskleidung zwischen zwei gegenüberliegenden Abschnitten der Umfangsfläche beträgt.

14. Dämpfungs-Schutzelement zur Verpackung zum Transport und/oder der Lagerung von radioaktiven Materialien, wobei das Element eine feste Auskleidung (15) aus steifem und sprödem Schaum umfasst, wobei eine steife Hülle (25) die Auskleidung bedeckt, **dadurch gekennzeichnet, dass** der Schaum ein Kohlenstoffschaum ist, und dass die Hülle an einer zu der Auskleidung weisenden inneren Fläche mit wenigstens einem Vorsprung (75) angebracht ist.

15. Dämpfungs-Schutzelement nach Anspruch 14, **dadurch gekennzeichnet, dass** der Vorsprung entweder zylindrisch oder konisch oder kegelstumpfförmig ist.

16. Dämpfungs-Schutzelement nach einem der Ansprüche 14 oder 15, **dadurch gekennzeichnet, dass** die Auskleidung (15) eine gleichmäßige Struktur aufweist und der Vorsprung (75) von der Auskleidung durch einen Freiraum getrennt ist.

17. Verpackung (74) zum Transport und/oder der Lagerung von radioaktiven Materialien, **dadurch gekennzeichnet, dass** ihre Oberfläche mit wenigstens einem Dämpfungs-Schutzelement nach einem der vorhergehenden Ansprüche ausgestattet ist, mit dem sie verbunden ist.

## Claims

1. Protective shock absorbing element for a transport and/or temporary storage packaging for radioactive materials, said element comprising a solid infill (15) made of rigid and brittle foam, a rigid casing (25) covering the infill, the infill having, between a face (17) exposed to impacts and an opposite face adjacent to the packaging (74), a foam discontinuity, the discontinuity having dimensions equal to at least five times a maximum diameter of foam pores, the foam delimiting the discontinuity by a section comprising a reentrant angle in the foam, **characterised in that** the foam is a carbon foam.

2. Protective shock absorbing element according to claim 1, **characterised in that** the discontinuity is an empty volume.

3. Protective shock absorbing element according to claim 1, **characterised in that** the infill is machined.

4. Protective shock absorbing element according to claim 1, **characterised in that** the discontinuity is a volume occupied either by a carbon foam plug separate from the infill, or by a solid inclusion.

5. Protective shock absorbing element according to any one of claims 1 to 4, **characterised in that** the discontinuity is present either on the face exposed to impacts or on the opposite face.

6. Protective shock absorbing element according to claim 1, **characterised in that** the infill comprises a plurality of solid prefabricated blocks made of carbon foam.

7. Protective shock absorbing element according to claim 6, **characterised in that** each solid block comprises at least one discontinuity.

8. Protective shock absorbing element according to claim 5, **characterised in that** the face exposed to the impacts and the opposite face are plane and parallel.

9. Protective shock absorbing element according to any one of the previous claims, **characterised in that** the discontinuity is formed by machining.

10. Protective shock absorbing element for a transport and/or temporary storage packaging for radioactive materials, said element comprising a solid infill (15) made of rigid and brittle foam, a rigid casing (25) covering the infill, **characterised in that** the foam is a carbon foam, and the infill has a hardening coating (28), at least on the face exposed to impacts.

11. Protective shock absorbing element according to claim 10, **characterised in that** the hardening coating fills pores (27) in the foam.

12. Protective shock absorbing element for a transport and/or temporary storage packaging for radioactive materials, said element comprising a solid infill (15) made of rigid and brittle foam, a rigid casing (25) covering the infill, **characterised in that** the foam is a carbon foam, and **in that** the protective element comprises a clearance (26) between the envelope and a peripheral face of the infill connecting the face exposed to the impacts to the opposite face.

13. Protective shock absorbing element according to claim 12, **characterised in that** the peripheral clearance is between 0.1% and 5% of a width of the infill between two opposite portions of the peripheral face.

14. Protective shock absorbing element for a transport and/or temporary storage packaging for radioactive materials, said element comprising a solid infill (15) made of rigid and brittle foam, a rigid casing (25) covering the infill, **characterised in that** the foam is a carbon foam, and **in that** the envelope is provided with an inner face, oriented towards the infill, with at least one excroissance (75).

15. Protective element according to claim 14, **characterised in that** the excroissance is either cylindrical, conical or frusto-conical.

16. Protective element according to any one of claims 14 or 15, **characterised in that** the infill (15) has a regular structure, and the excroissance (75) is separated from the infill by a clearance.

17. Transport and/or temporary storage packaging (74) for radioactive materials, **characterised in that** its surface is provided with at least one protective shock absorbing element according to any one of the previous claims, that is connected to it.
